# EUROPÄISCHE PATENTSCHRIFT

(11) **EP 2 222 991 B1**
(45) Veröffentlichungstag und Bekanntmachung des Hinweises auf die Patenterteilung: **27.06.2012**
(21) Anmeldenummer: 08864633.6
(22) Anmeldetag: 18.12.2008
(51) Int. Cl.: F16K 31/04, F16K 1/22

(54) **STELLANTRIEB ZUR BETÄTIGUNG EINER VENTILKLAPPE IN EINEM VENTILSITZ**
ACTUATOR FOR ACTUATING A VALVE FLAP IN A VALVE SEAT
ENTRAÎNEMENT DE RÉGLAGE POUR ACTIONNER UN CLAPET DE SOUPAPE DANS UN SIÈGE DE SOUPAPE

(30) Priorität: 21.12.2007 DE 102007061996
(43) Veröffentlichungstag der Anmeldung: 01.09.2010
(73) Patentinhaber: Continental Automotive GmbH, 30165 Hannover (DE)
(72) Erfinder: BONANNO, Rosario, 65812 Bad Soden (DE)
(86) Internationale Anmeldenummer: PCT/EP2008/067892
(87) Internationale Veröffentlichungsnummer: WO 2009/080703

(56) Entgegenhaltungen:
- DE-A1- 10 057 836
- DE-A1-102005 028 374
- DE-A1-102005 051 304
- GB-A- 2 400 157

## Beschreibung

Die Erfindung bezieht sich auf einen Stellantrieb zur Betätigung einer Ventilklappe in einem Ventilsitz. Die Erfindung bezieht sich ferner auf die Verwendung des Stellantriebs. Stellantriebe zur Betätigung von Ventilklappen in Ventilsitzen sind bekannt.

In der DE 10 2005 051 304 A1 wird ein Verfahren zur Abreinigung von Verschmutzungen zwischen einer Ventilklappe und einem Ventilsitz beschrieben. Der dabei verwendete Stellantrieb weist ein erstes Zahnsegment und ein zweites Zahnsegment auf, die miteinander im Eingriff stehen. Beide Zahnkreise der Zahnsegmente weisen dabei zueinander gegenläufig veränderbare Radien auf, so dass sich im Betrieb unterschiedliche Drehmomente einstellen lassen. Dies bedeutet, dass der Zahnkreis des ersten Zahnsegments und der Zahnkreis des zweiten Zahnsegments nicht kreisförmig, sondern spiralförmig verlaufen, wobei verschiedenartige Spiralenabschnitte hintereinander vorgesehen sein können. Bei solchen Stellantrieben ist in der Regel nachteilig, dass mehrere Getriebeteile beziehungsweise Zahnsegmente angeordnet werden müssen, was einen relativ großen Bauraum für den Stellantrieb erforderlich macht.

In der GB 2400 157 A wird ein Stellantrieb gemäß dem Oberbegriff von Anspruch 1 beschrieben.

Der Erfindung liegt daher die Aufgabe zugrunde, einen Stellantrieb zur Betätigung einer Ventilklappe in einem Ventilsitz zu schaffen, der einen relativ geringen Bauraum erforderlich macht. Der Erfindung liegt ferner die Aufgabe zugrunde, eine Verwendung des Stellantriebs zu schaffen.

Die der Erfindung zugrunde liegende Aufgabe wird durch einen Stellantrieb zur Betätigung einer Ventilklappe in einem Ventilsitz gelöst, bei dem ein Elektromotor mit einem Ritzel angeordnet ist, das direkt in die Verzahnung eines Zahnrades mit Stirnverzahnung eingreift, welches direkt fest mit der Antriebswelle verbunden ist, an der die Ventilklappe angeordnet ist. Als Zahnrad kann dabei beispielsweise auch ein Zahnsegment eingesetzt werden. Unter die Bezeichnung Ventilklappe fallen neben den verschieden ausführbaren Ventilklappen beispielsweise auch Drosselklappen von Drosselklappenstutzen. Es hat sich in überraschender Weise gezeigt, dass ein Stellantrieb auch dann zur Betätigung einer Ventilklappe in einem Ventilsitz geeignet ist, wenn das Ritzel des Elektromotors direkt in die Stirnverzahnung eines Zahnrades eingreift, das mit der Antriebswelle der Ventilklappe direkt verbunden ist und man somit auf die Anordnung zusätzlicher Getriebeteile, wie beispielsweise zusätzlicher Zahnsegmente, verzichtet. Der Stellantrieb eignet sich daher in hervorragender Weise vorteilhaft zur Betätigung von Ventilen, wenn nur ein relativ geringer Bauraum zur Verfügung steht.

Die Stirnverzahnung des Zahnrades ist der Draufsicht auf das Zahnrad spiralförmig von außen nach innen verlaufend angeordnet. Unter der Spirale ist dabei eine Kurve zu verstehen, die um einen zentralen Punkt oder eine zentrale Achse verläuft und sich, je nach Laufrichtung, immer weiter von diesem beziehungsweise dieser entfernt oder annähert. Der Begriff "Spirale" ist somit nicht auf spezifische Spiraltypen eingeschränkt. Dabei ist vorteilhaft, dass während der Betätigung der Ventilklappe auf relativ einfache Weise verschiedenartige Drehmomente eingestellt werden können, durch die die Ventilklappe entsprechend betätigt wird. Somit lassen sich beispielsweise ein größeres Anfangsdrehmoment und ein kleineres Enddrehmoment durch die spiralförmige Ausbildung der Stirnverzahnung einstellen. Unter dem Anfangsdrehmoment ist dabei dasjenige Drehmoment zu verstehen, das am Beginn des Betriebes auf die Antriebswelle wirkt, wobei sich die Ventilklappe in der Position des geschlossenen Ventils befindet. Unter dem Enddrehmoment ist dabei dasjenige Drehmoment zu verstehen, das letztlich am Ende des Betriebes auf die Antriebswelle wirkt, wobei sich die Ventilklappe in der geöffneten Position des Ventils befindet. Dabei ist besonders vorteilhaft, dass sich Verschmutzungen zwischen der Ventilklappe und dem Ventilsitz nahezu vollständig allein durch die Beaufschlagung der entsprechenden Drehmomente auf die Antriebswelle entfernen lassen. Dies ist vorteilhaft möglich, obwohl auf die Anordnung von zusätzlichen Zahnsegmenten oder zusätzlichen Getriebeteilen verzichtet wird. Auf die Anwendung von Reinigungsmitteln oder mechanischen Reinigungsvorrichtungen kann dabei vollständig verzichtet werden. Die tatsächlichen Beträge der Drehmomente sind abhängig von der Ventilgröße und werden ingenieurmäßig ermittelt.

Gemäß einer weiteren Ausgestaltung der Erfindung liegt das Verhältnis zwischen dem ersten Abstand R1 zwischen der Längsachse der Antriebswelle und der Flankenmitte der äußersten Flanke F1 der Stirnverzahnung, dem die geschlossene Position der Ventilklappe zugeordnet ist, und dem zweiten Abstand R2 zwischen der Längsachse der Antriebswelle und der Flankenmitte der innersten Flanke F2 der Stirnverzahnung, bei dem die geöffnete Position der Ventilklappe zugeordnet ist, im Bereich von 1,6 bis 2. Unter der äußersten Flanke F1 ist dabei diejenige Flanke zu verstehen, die im Betrieb den größten Abstand zur Längsachse der Antriebswelle aufweist. Unter der innersten Flanke F2 ist dabei diejenige Flanke zu verstehen, die im Betrieb den kleinsten Abstand zur Längsachse der Antriebwelle aufweist. Liegt das Verhältnis zwischen dem ersten Abstand R1 und dem zweiten Abstand R2 im Bereich von 1,6 bis 2, so ist auch nach langen Betriebszeiten des Ventils gewährleistet, dass sich Verschmutzungen zwischen der Ventilklappe und dem Ventilsitz nahezu vollständig entfernen lassen, wobei auf zusätzliche Reinigungsverfahren verzichtet werden kann.

Gegenstand der Erfindung ist ferner die Verwendung des Stellantriebs zur Betätigung eines Abgasrückführventils eines Kraftfahrzeuges. Für Stellantriebe zur Betätigung eines Abgasrückführventils eines Kraftfahrzeuges steht in der Regel nur ein sehr eng begrenzter Bauraum zur Verfügung. Aufgrund der kompakten Bauweise des Stellantriebs ist sein Einsatz als Stellantrieb zur Betätigung eines Abgasrückführventils eines Kraftfahrzeuges besonders vorteilhaft.

Die Erfindung wird nachfolgend anhand der Zeichnung (Fig. 1 bis Fig. 4) näher und beispielhaft erläutert.
Fig. 1 zeigt den Stellantrieb dreidimensional mit der Ventilklappe in einem Ventilsitz.
Fig. 2 zeigt die Draufsicht auf ein als Zahnrad angeordnetes Zahnsegment mit einer spiralförmig angeordneten Stirnverzahnung.
Fig. 3 zeigt den Stellantrieb in der Seitenansicht mit der Ventilklappe in der geschlossenen Position.
Fig. 4 zeigt den Stellantrieb in der Seitenansicht mit der Ventilklappe in der geöffneten Position.

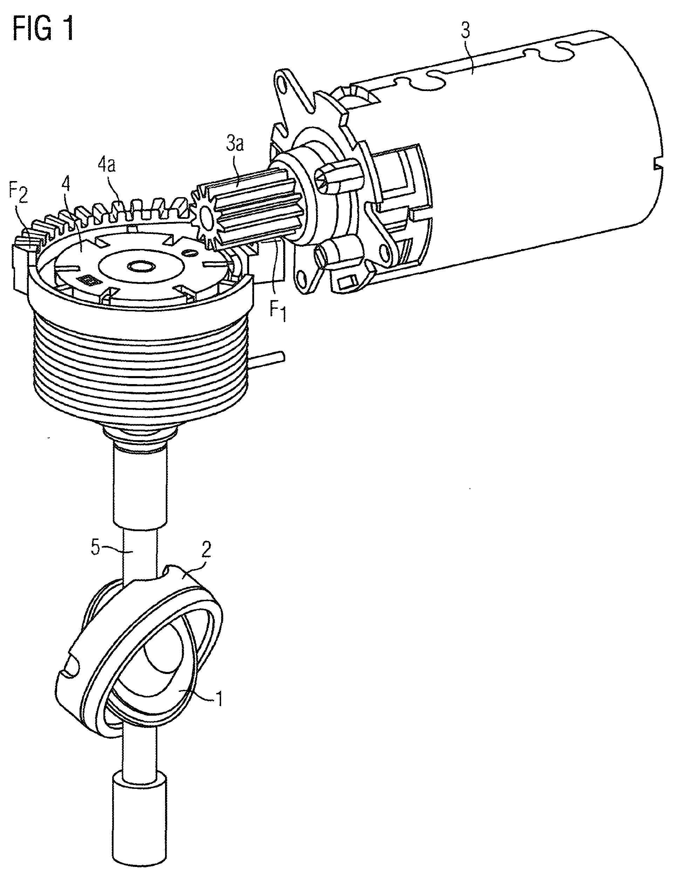

In Fig. 1 ist der Stellantrieb zur Betätigung einer Ventilklappe 1 in einem Ventilsitz 2 dreidimensional dargestellt. Bei dem Stellantrieb ist ein Elektromotor 3 mit einem Ritzel 3a angeordnet, das direkt in die Verzahnung eines Zahnrades 4 mit Stirnverzahnung 4a eingreift. Als Zahnrad 4 ist hier bezüglich der Stirnverzahnung 4a ein Zahnsegment angeordnet. Das Zahnrad 4 ist direkt mit der Antriebswelle 5 verbunden, an der die Ventilklappe 1 angeordnet ist. Zwischen dem Elektromotor 3 und dem Zahnrad 4 sind in vorteilhafter Weise keine zusätzlichen Getriebeteile oder Zahnsegmente angeordnet, wodurch der Stellantrieb relativ kompakt baut und nur einen relativ geringen Bauraum benötigt. Die Ventilklappe 1 befindet sich in der geschlossenen Position im Ventilsitz 2. In dieser Position steht das Ritzel 3a des Elektromotors 3 mit der Stirnverzahnung 4a unmittelbar mit der äußersten Flanke F1 der Stirnverzahnung 4a im Eingriff.

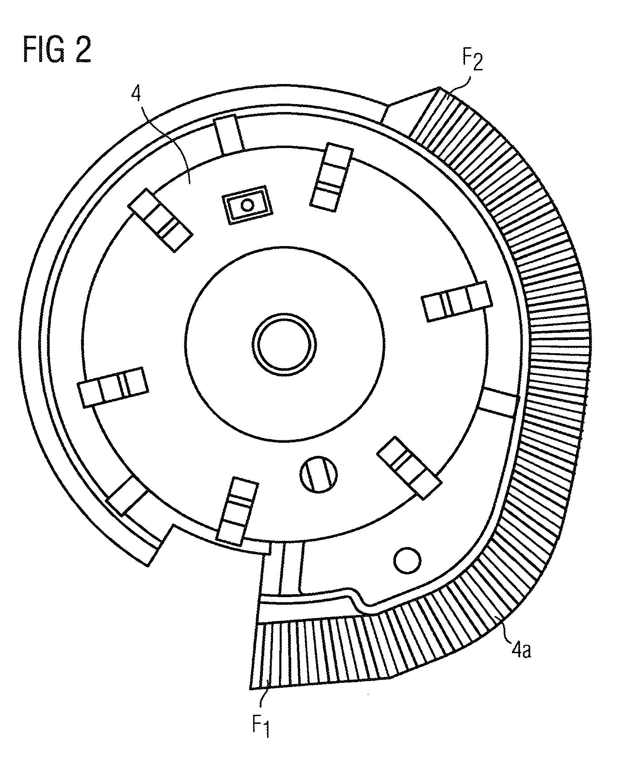

In Fig. 2 ist das Zahnrad 4 in der Draufsicht mit der spiralförmig von außen nach innen verlaufenden Stirnverzahnung 4a dargestellt. Bezüglich der Stirnverzahnung 4a handelt es sich bei dem Zahnrad 4 um ein Zahnsegment. Die Stirnverzahnung 4a weist eine äußerste Flanke F1 und eine innerste Flanke F2 auf, die jeweils einen unterschiedlichen Abstand zur Drehachse des Zahnrades 4 aufweisen. Durch den spiralförmigen Verlauf der Stirnverzahnung 4a ist auf relativ einfache Weise sichergestellt, dass während des Betriebs des Ventils unterschiedliche Drehmomente auf die Antriebswelle (nicht dargestellt) einwirken können. Dies ist besonders im Hinblick auf die Abreinigung von Verschmutzungen zwischen der Ventilklappe und dem Ventilsitz (nicht dargestellt) von großer Bedeutung.

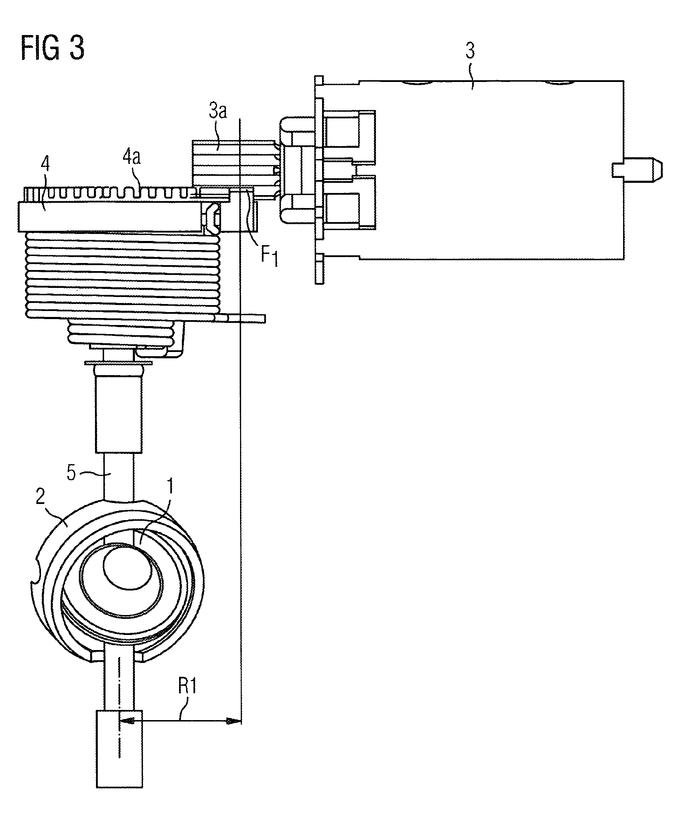

In Fig. 3 ist der Stellantrieb zur Betätigung einer Ventilklappe 1 in einem Ventilsitz 2 in der Seitenansicht dargestellt. Dabei befindet sich die Ventilklappe 1 analog Fig. 1 in der geschlossenen Position, und das Ritzel 3a steht über die äußerste Flanke F1 mit der Stirnverzahnung 4a im Eingriff. In dieser Position ist der erste Abstand R1 zwischen der Längsachse der Antriebswelle 5 und der Flankenmitte der äußersten Flanke F1 der Stirnverzahnung 4a, dem die geschlossene Position der Ventilklappe 1 zugeordnet ist, realisiert. Wird nun, ausgehend von dieser Position, der Elektromotor 3 in entsprechender Weise betätigt, so verlässt das Ritzel 3a die äußerste Flanke F1 und wandert auf der Stirnverzahnung 4a entsprechend entlang, wodurch sich die Ventilklappe 1 bedingt durch das größere Drehmoment langsam öffnet. Dieses langsame Öffnen der Ventilklappe 1 bewirkt eine vorteilhafte Abreinigung der Verschmutzungen zwischen der Ventilklappe 1 und dem Ventilsitz 2. Bei kontinuierlichem Betrieb des Elektromotors 3 verringert sich der erste Abstand R1 weiter, bis schließlich der zweite Abstand R2 (nicht dargestellt) eingestellt wird.

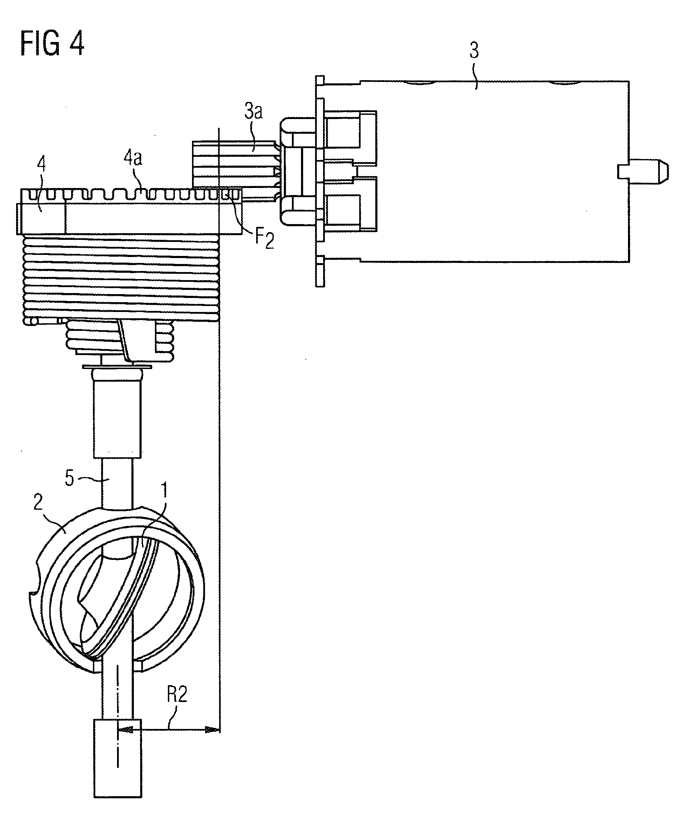

In Fig. 4 ist der Stellantrieb zur Betätigung einer Ventilklappe 1 in einem Ventilsitz 2 in der Seitenansicht mit vollständig geöffneter Ventilklappe 1 dargestellt. In dieser Position steht das Ritzel 3a des Elektromotors 3 über die innerste Flanke F2 mit der Stirnverzahnung 4a im Eingriff. Der zweite Abstand R2 zwischen der Längsachse der Antriebswelle 5 und der Flankenmitte der innersten Flanke F2 der Stirnverzahnung 4a, dem die geöffnete Position der Ventilklappe 1 zugeordnet ist, ist kleiner als der in Fig. 3 dargestellte erste Abstand R1. Dies bedeutet, dass im Bereich der geöffneten Position der Ventilklappe 1 ein kleineres Drehmoment auf die Antriebswelle 5 einwirkt, was jedoch geringere Stellzeiten des Ventils zur Folge hat. Diese sind in dieser Position auch erwünscht, da es in dieser Position nicht mehr um die Abreinigung von Verschmutzungen zwischen der Ventilklappe 1 und dem Ventilsitz 2 geht, sondern eine möglichst schnelle Betätigung des Ventils beabsichtigt ist. Der Stellantrieb eignet sich in besonders vorteilhafter Weise zur Betätigung eines Abgasrückführventils eines Kraftfahrzeuges, da er kompakt baut, zuverlässig über längere Betriebszeiten arbeitet und nur einen geringen Bauraum für seine Anordnung erfordert.

## Patentansprüche

1. Stellantrieb zur Betätigung einer Ventilklappe (1) in einem Ventilsitz (2), bei dem ein Elektromotor (3) mit einem Ritzel (3a) angeordnet ist, das direkt in die Verzahnung eines Zahnrades (4) mit Stirnverzahnung (4a) eingreift, welches direkt fest mit der Antriebswelle (5) verbunden ist, an der die Ventilklappe (1) angeordnet ist, **dadurch gekennzeichnet, dass** die Stirnverzahnung (4a) des Zahnrades (4) in der Draufsicht auf das Zahnrad (4) spiralförmig von außen nach innen verlaufend angeordnet ist.

2. Stellantrieb nach Anspruch 1, bei dem das Verhältnis zwischen dem ersten Abstand R1 zwischen der Längsachse der Antriebswelle (5) und der Flankenmitte der äußersten Flanke F1 der Stirnverzahnung (4a), dem die geschlossene Position der Ventilklappe (1) zugeordnet ist, und dem zweiten Abstand R2 zwischen der Längsachse der Antriebswelle (5) und der Flankenmitte der innersten Flanke F2 der Stirnverzahnung (4a), dem die geöffnete Position der Ventilklappe (1) zugeordnet ist, im Bereich von 1,6 bis 2 liegt.

3. Verwendung des Stellantriebs nach einem der Ansprüche 1 oder 2 zur Betätigung eines Abgasrückführventils eines Kraftfahrzeuges.

## Claims

1. Actuator for actuating a valve flap (1) in a valve seat (2), in which an electric motor (3) is arranged with a pinion (3a) which engages directly into the toothing of a gearwheel (4) which has spur toothing (4a) and is fixedly connected directly to the drive shaft (5), on which the valve flap (1) is arranged **characterized in that**, the spur toothing (4a) of the gearwheel (4) is arranged so as to extend, in a plan view of the gearwheel (4), in a spiral shape from the outside to the inside.

2. Actuator according to Claim 1, in which the ratio between the first spacing R1 between the longitudinal axis of the drive shaft (5) and the flank center of the outermost flank F1 of the spur toothing (4a), which first spacing R1 is assigned the closed position of the valve flap (1), and the second spacing R2 between the longitudinal axis of the drive shaft (5) and the flank center of the innermost flank F2 of the spur toothing (4a), which second spacing R2 is assigned the open position of the valve flap (1), lies in the range from 1.6 to 2.

3. Use of the actuator according to one of Claims 1 or 2 for actuating an exhaust gas recirculation valve of a motor vehicle.

## Revendications

1. Actionneur pour l'actionnement d'un clapet (1) de soupape dans un siège (2) de soupape, dans lequel il est prévu un moteur (3) électrique ayant un pignon (3a), qui engrène directement dans la denture d'une roue (4) dentée à denture (4a) droite, qui est solidaire directement de l'arbre (5) d'entraînement, sur lequel le clapet (1) de soupape est monté, **caractérisé en ce que** la denture (4a) droite de la roue (4) dentée est disposée, en vue en plan, sur la roue (4) dentée, en s'étendant en forme de spirale de l'extérieur vers l'intérieur.

2. Actionneur suivant la revendication 1, dans lequel le rapport entre la première distance R1 entre l'axe longitudinal de l'arbre (5) d'entraînement et le milieu du flanc F1 le plus extérieur de la denture (4a) droite, à laquelle est associée la position fermée du clapet (1) de soupape, et la deuxième distance R2 entre l'axe longitudinal de l'arbre (5) d'entraînement et le milieu du flanc F2 le plus à l'intérieur de la denture (4a) droite, à laquelle est associée la position ouverte du clapet (1) de soupape, est compris entre 1,6 et 2.

3. Utilisation de l'actionneur suivant l'une des revendications 1 ou 2 pour l'actionnement d'une vanne de recyclage des gaz d'échappement d'un véhicule automobile.
